# EUROPEAN PATENT APPLICATION

(11) **EP 0 949 774 A1**
(43) Date of publication of application: **13.10.1999**
(21) Application number: 99105176.4
(22) Date of filing: 31.03.1999
(51) Int. Cl.: H04J 3/06, H04L 12/56, H04J 14/08, H04B 10/207, H04J 3/16

(54) **Subscriber optical communications system using bit-interleaved downlink channels**

(30) Priority: 06.04.1998 JP 9369998
(71) Applicant: NEC CORPORATION, Tokyo (JP)
(72) Inventor: Ishikawa, Hajime, Minato-ku, Tokyo (JP)
(74) Representative: VOSSIUS & PARTNER

(57) **Abstract**

A subscriber optical communications system comprises a network terminal, a number of subscriber terminals, and an optical network interconnecting the network terminal and the subscriber terminals. The network terminal time-division is arranged to time-division multiplex a number of channel signals on a bit-by-bit basis into a downlink signal and broadcast the downlink signal to the subscriber terminals through the optical network. Each subscriber terminal receives the broadcast signal through the optical network, time-division demultiplexes the received signal into component channel signals and selects a desired one of the component channel signals using a marker inserted at the network terminal. In the opposite direction of transmission, each subscriber terminal transmits an uplink signal on a time-division multiplex access mode to the network terminal. Preferably, the marker is a logical inverse of at least one bit in a synchronization sequence contained in a predetermined one of the transmitted channel signals, and the marker is removed at the subscriber terminal by producing a logical inverse of the logically inverted at least one bit to restore the original synchronization sequence.

## Description

The present invention relates generally to optical communications systems, and more specifically to a subscriber optical access network.

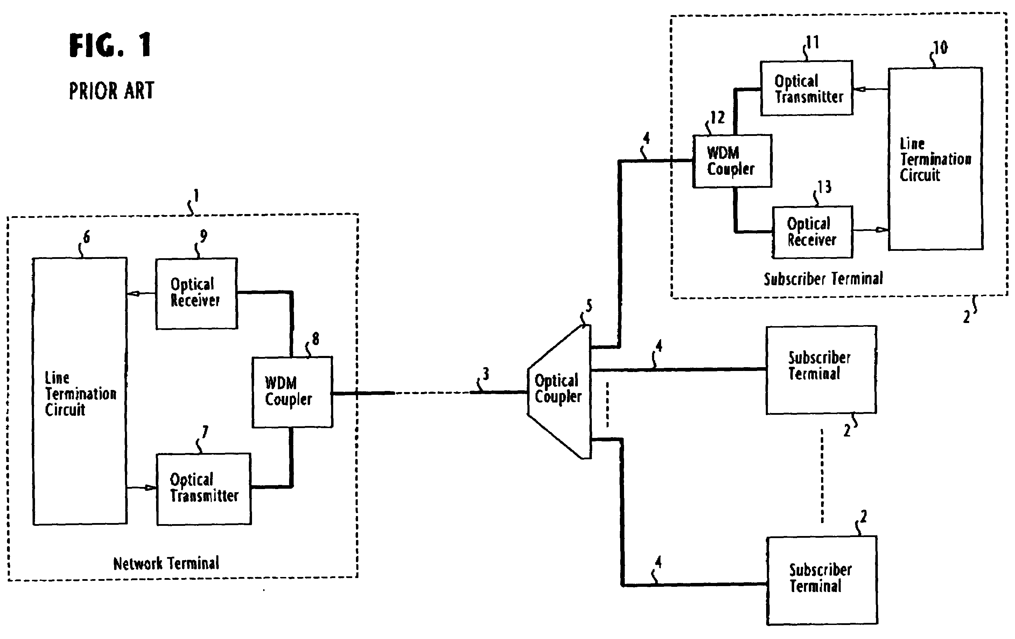

In a prior art subscriber optical communications system (Fig. 1), a network terminal 1 represents a peripheral point of a public switched communications network for a number of subscriber terminals 2, which share a passive optical network. As many as 32 subscriber terminals are accommodated by the system. The passive optical network consists of a common optical link 3 that connects the network terminal 1 to a plurality of local optical links 4 via an optical coupler 5. This optical network is shared between different wavelengths for the transmission of signals in opposite directions, using wavelength division multiplexing.

In the network terminal 1, a downlink signal is produced by a line termination circuit 6 by assembling a transmit signal into payload cells of the ATM (asynchronous transfer mode) format, which are transmitted at a rate of 622 Mbps. Along with the payload cells, control cells are transmitted to inform the individual subscriber terminals of their assigned time slots. The ATM signal is converted by an optical transmitter 7 to an optical signal of wavelength 1.3 µm and forwarded onto the common link 3 via a WDM (wavelength division multiplex) coupler 8. The downlink signal on link 3 is broadcast to all subscriber terminals 2 by coupling it through the optical coupler 5 to the local links 4.

In each subscriber terminal 2, the optical downlink signal is coupled through the WDM coupler 12 to an optical receiver 13 where it is converted to a corresponding ATM signal and feeds a line termination circuit 10. An uplink signal is produced in the line termination circuit 10 by assembling a transmit signal into payload cells of the ATM format and transmitted on the assigned time slots at a rate of 156 Mbps. The uplink ATM signal is converted by an optical transmitter 11 to an optical signal of wavelength 1.5 µm and forwarded onto the associated local link 4 via a WDM coupler 12.

The optical uplink signal on each local link 4 is multiplexed by the optical coupler 5 with other optical uplink signals and transmitted over the link 3 to the network terminal 1, where it is coupled via the WDM coupler 8 to an optical receiver 9 for conversion to a corresponding electrical signal for application to the line termination circuit 6.

Since the 622 Mbps bandwidth of the downlink signal is shared by as many as 32 subscribers, each subscriber is assigned an average bandwidth of approximately 19 Mbps. However, it is desirable to increase the bandwidth of the downlink signal to meet the future demand for applications such as high speed Internet access, video-on demand service and high speed downloading.

In the past, the capacity of a communication system was increased by simply increasing the operating speed of the terminals, using a common data format. If the operating speed of the line termination circuits at each end of the optical network were to be increased, difficulty would be encountered in developing complex semiconductor circuitry that can operate at the required speed. In addition, the development of a new data format and a new access scheme would require a costly investment. To meet requirements for low cost and compatibility with existing systems, it is desirable to increase the bandwidth of a communication system without relying on the prior art approach.

It is therefore an object of the present invention to provide a subscriber optical communications system which allows downlink transmission capacity to be increased with low cost while maintaining compatibility with existing systems.

According to the present invention, there is provided a subscriber optical communications system comprising a network terminal, a plurality of subscriber terminals, and an optical network interconnecting the network terminal and the subscriber terminals. The network terminal time-division is arranged to time-division multiplex a plurality of channel signals on a bit-by-bit basis into a downlink signal and broadcast the downlink signal to the subscriber terminals through the optical network. Each of the subscriber terminals receives the broadcast signal through the optical network and time-division demultiplexes the received downlink signal into component channel signals and selects a desired one of the component channel signals. Each subscriber terminal is arranged to transmit an uplink signal on a time-division multiplex access mode to the network terminal through the optical network.

Preferably, the marker is a logical inverse of at least one bit in a synchronization sequence contained in a predetermined one of the transmitted channel signals, and the marker is removed at the subscriber terminal by producing a logical inverse of the logically inverted at least one bit to restore the original synchronization sequence.

The present invention will be described in further detail with reference to the accompanying drawings, in which:
Fig. 1 is a block diagram of a prior art subscriber optical communications system;
Fig. 2 is a block diagram of a subscriber optical communications system according to a first embodiment of the present invention;
Fig. 3 is a block diagram of the marker insertion circuit of Fig. 2;
Figs. 4A and 4B show ATM data structures used in the present invention;
Fig. 5 is a block diagram of a subscriber terminal according to a second embodiment of the present invention;
Fig. 6 is a timing diagram of the bit timing shifter of Fig. 5; and
Figs. 7 to 9 are timing diagrams useful for understanding the operation of the bit timing shifter and time division demultiplexer of Fig. 5.

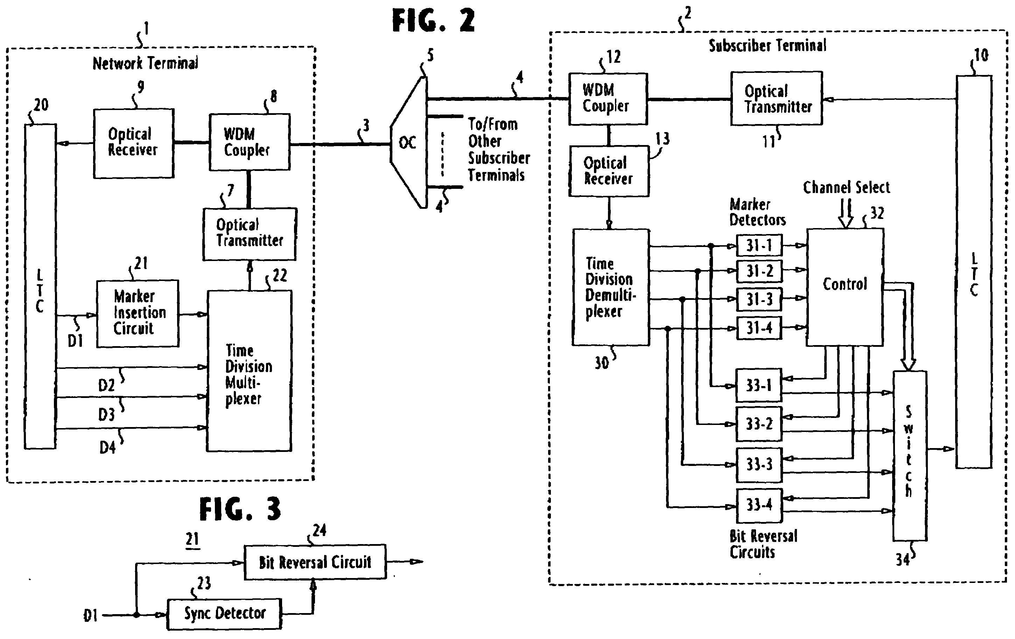

In Fig. 2, there is shown a subscriber optical communications system according to one embodiment of the present invention.

According to the present invention, a plurality of 622-Mbps downlink ATM data channels are produced by a line termination circuit 20. As one example, four ATM channels D1, D2, D3 and D4 are shown. The ATM channel D1 is applied to a marker insertion circuit 21 where a marker is inserted and the marker-inserted D1 signal is supplied to a time division multiplexer 22 to which the other data channels are also supplied with no markers being inserted.

Each of the ATM data channels includes an OAM (operations, administration and maintenance) cell which periodically occurs at frame intervals, or every 324 ATM cells. In order to ensure that each of the transmitted channel signals has sufficient timing information to enable the subscriber terminals to maintain synchronization, the transmitted signal is scrambled. For this purpose, the OAM cell of each data channel contains a known synchronizing bit sequence for indicating the starting point of the scrambling to each subscriber terminal. The subscriber terminal detects the sync bit sequence to start descrambling its received signal.

In the marker insertion circuit 21, a marker is inserted into each OAM cell of the D1 channel in order to allow each subscriber terminal to distinguish the D1 channel from other channels. This is achieved by producing a logical inverse of at least one bit value of the known sync bit sequence of the D1 channel. As shown in Fig. 3, the marker insertion circuit 21 includes a sync detector 23 and a bit reversal circuit 24. Sync detector 23 detects the known sync bit sequence contained in each OAM cell of the D1 channel. In response, the sync detector 23 enables the bit reversal circuit 24 to produce a logical inverse in the sync bit sequence.

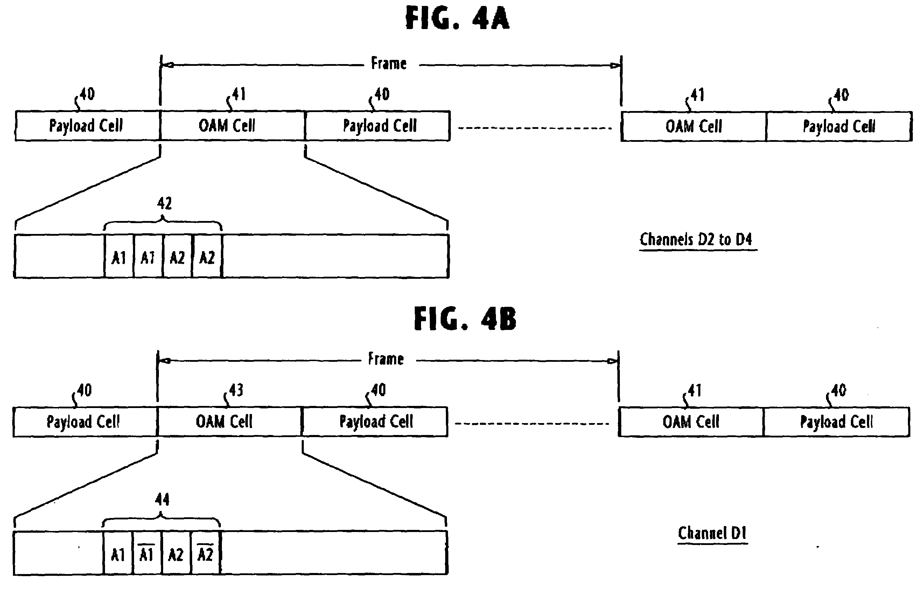

As illustrated in Fig. 4A, each of the D2 to D4 channels has payload cells 40 and an OAM cell 41 that occurs at frame intervals. The OAM cell 41 has a four-byte synchronization field 42 containing a sync bit sequence of bytes A1, A1, A2, A2. In the case of the D1 channel, the output signal from the bit reversal circuit 24 has an OAM cell 43, as shown in Fig. 4B, whose sync field 44 contains complementary bytes A1 and A2 in the second and fourth byte positions.

In the time division multiplexer 22, the 622-Mbps D1 to D4 channels are bit-interleaved into a 2.5 Gbps downlink TDM data stream. This data stream is converted to an optical signal of wavelength 1.5 µm by the optical transmitter 7 and forwarded onto the common optical link 3 via the WDM coupler 8 and broadcast to local links 4.

After converting the broadcast optical signal to a corresponding 2.5 Gbps electrical signal, each subscriber terminal 2 feeds it to a time division demultiplexer 30 where it is de-interleaved bit-by-bit and assembled into original signals of D1 to D4 channels, which are respectively applied to marker detectors 31-1 through 31-4 of identical circuit.

Because of the bit-interleaved time division multiplexing, mistiming of at least one bit position would cause the demultiplexed signals to appear at marker detectors which are displaced in location from intended marker detectors. When the demultiplexer 30 is synchronized to the transmitted signal, channels D1, D2, D3, D4 are intended to be supplied to marker detectors 31-1 to 31-4, respectively, and hence the inserted marker is detected by the marker detector 31-1. If the demultiplexer 30 is out of timing by one bit interval with respect to the transmitted signal, channels D1, D2, D3, D4 may appear at marker detectors 31-2, 31-3, 31-4 and 31-1, respectively, which are displaced by one bit location with respect to the intended marker detectors. Therefore the inserted marker is detected by the marker detector 31-2, instead of from the marker 31-1. Any one of the marker detectors produces a marker presence signal when it receives the D1 channel signal from the time division demultiplexer 30.

The outputs of marker detectors 31-1 through 31-4 are connected to a control circuit 32. Depending on the location of its input terminals to which the marker presence signal is supplied, the control circuit 32 knows the location of D1 channel and supplies an enable signal to one of bit reversal circuits 33-1 through 33-4 which are connected to the outputs of demultiplexer 30 corresponding respectively in location to the marker detectors 31-1 through 31-4. As a result, if the outputs of demultiplexer 30 are supplied to the intended marker detectors, they are also supplied to the intended bit reversal circuits. Each of the bit reversal circuits 33 passes its input signal on to the corresponding input of a switch 34 while performing a bit reversal on the sync bit sequence of each OAM cell to restore its original bit pattern only if it is enabled by the controller 32. If not enabled, each bit reversal circuit simply functions as a signal path for coupling a channel signal to the switch 34.

If the control circuit 32 determines that a marker presence signal is supplied from the marker detector 31-1, it knows that the bit reversal circuit 33-1 is receiving the D1 channel. Thus, the control circuit 32 enables the bit reversal circuit 33-1 to reverse the second and fourth byte positions of the sync field of the D1 channel. In this manner, the inserted marker is, in effect, removed and the original bit sequence is restored. If there is a time shift of one bit interval in the demultiplexer 30, as mentioned above, and the marker detector 31-2 is receiving the D1 channel, the control circuit 30 knows that the D1 channel is arriving at the bit reversal circuit 33-2 and enables it to reverse the second and fourth sync byte positions of the arriving signal of the D1 channel.

With the location of the D1 channel being determined from the marker presence signal, the control circuit 32 uses this location as a reference to identify one of the input terminals of switch 34 at which the channel signal desired by the subscriber is arriving. A channel select command signal indicating the desired channel is applied to the control circuit 32. In response to this command signal, the control circuit 32 identifies the location of the desired signal at one of the inputs of switch 34 and controls it to select the desired channel for coupling to the line termination circuit 10. The sync bit sequence of the selected channel will then be used for descrambling its scrambled bit sequence.

Because of the bit-by-bit time division demultiplexing of downlink channels, the selected signal is arriving at the rate of 622 Mbps on the line termination circuit 10. The system of the present invention is able to increase its downlink capacity without increasing the operating speed of line termination circuits and without using high speed multiplex/demultiplex circuitry, while maintaining compatibility with existing systems.

It is shown that the downlink capacity of the subscriber optical communications system can be increased by a factor of four with only a 130 percent of the cost of the 622-Mbps broadcast downlink channel.

If the four 622-Mbps downlink channels were to be time-division multiplexed on a block-by-block basis, rather than on a bit-by-bit basis, the network terminal would have to assemble each downlink channel into a multi-bit block and time-compress it so that it can be multiplexed with other compressed blocks. Extremely high speed multiplex and demultiplex circuits would therefore be required at the opposite ends of the optical network.

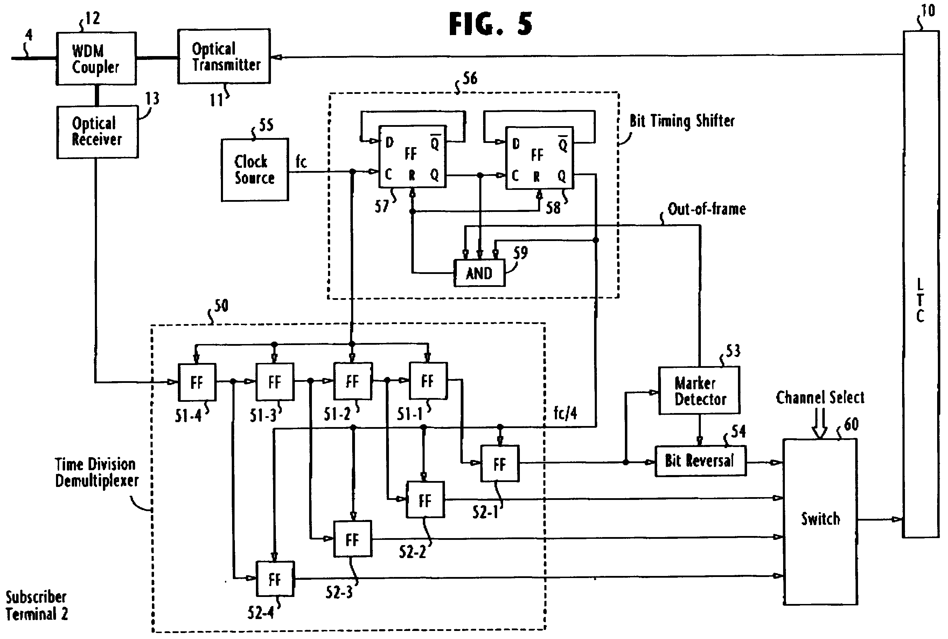

Fig. 5 is a block diagram of a modified embodiment of the subscriber terminal, in which the same numerals are used to indicate parts corresponding in significance to those in Fig. 2.

In this modification, there is only one marker detector 53 and a bit reversal circuit 54. Time division demultiplexer 50 includes flip-flops 51-1 to 51-4 connected in series from the output of optical receiver 13. These flip-flops are clocked at frequency f_{C} by a clock source 55 to store successive bits from the optical receiver 13. The outputs of flip-flops 51-1 through 51-4 are further connected to the data inputs of flip-flops 52-1 through 52-4, respectively and arranged to be clocked at frequency f_{C}/4 by a bit timing shifter 56. The output of flip-flop 52-1 is coupled to the marker detector 53 and the bit reversal circuit 54. The output of bit reversal circuit 54 is coupled to a switch 60 to which the outputs of other flip-flops 52-2 to 52-4 are connected.

When the marker detector 53 detects a marker inserted in the D1 channel, it enables the bit reversal circuit 54 to reverse the second and fourth byte positions of the OAM cells of the D1 channel, restoring its original sync bit sequence.

Marker detector 53 has a counter, not shown, to start incrementing a count when it detects a marker. If it fails to detect the next marker when the count has reached a predetermined value, the marker detector 53 interprets this as an out-of-frame state and supplies an output pulse to the bit timing shifter 56.

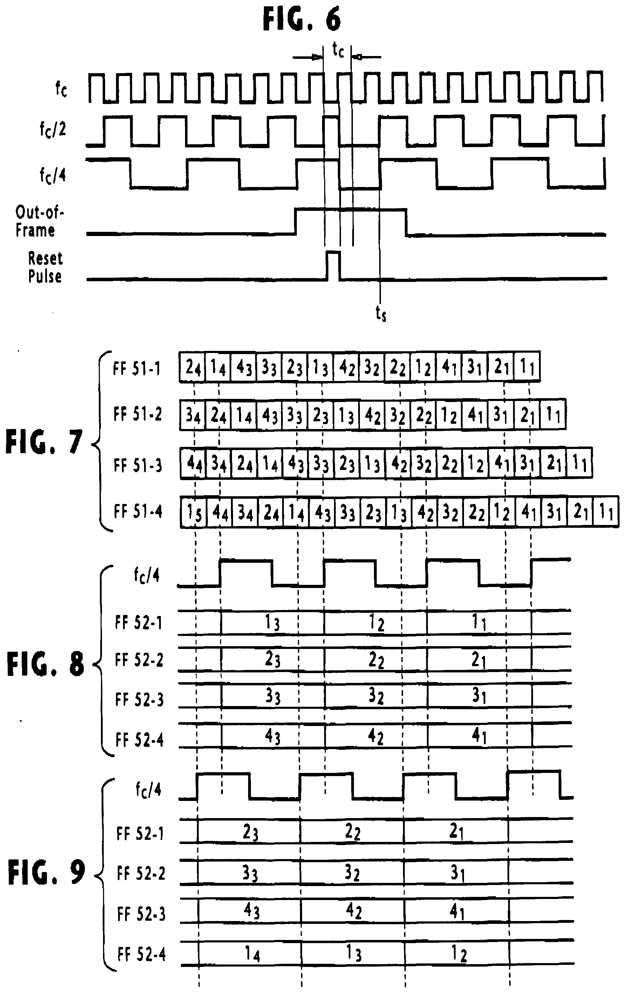

Bit timing shifter 56 comprises toggle flip-flops 57 and 58 which are connected in series to the clock source 55 to produce a first sequence of pulses at frequency f_{C}/2 at the Q output of flip-flop 57 and a second sequence of pulses at frequency f_{C}/4 at the Q output of flip-flop 58, as shown in Fig. 6. An AND gate 59 is connected to the Q outputs of flip-flops 57, 58. AND gate 59 is enabled when it is jointly asserted high by the flip-flops 57 and 58. The output of this AND gate is coupled to the reset input of flip-flops 57, 58. If the out-of-frame signal from the marker detector 53 is present at instant the AND gate 59 is enabled, the flip-flops 57, 58 are reset low.

It Is seen from Fig. 6 that, by resetting the flip-flops 57, 58 in this manner, the flip-flop 58 starts producing its clock pulses f_{C}/4 at the instant t_{S} that is shifted (i.e., advanced) by one clock interval t_{C} of source clock pulses f_{C}.

When the frame timing of demultiplexer 50 is synchronized to the network terminal, channel signals D1, D2, D3, D4 are successively stored in flip-flops 51-1 to 51-4 in response to the clock pulse f_{C} as shown in Fig. 7 and simultaneously transferred to corresponding flip-flops 52-1 to 52-4 in response to the leading edge of clock pulse f_{C}/4, as shown in Fig. 8. Thus, an inserted marker is removed from the D1 channel by the bit reversal circuit 54, and the positions of the channel signals at the inputs of switch 60 are uniquely determined and maintained as long as this condition continues. In response to a channel select command signal, the switch 60 selects a desired channel for coupling to the line termination circuit 10.

If the demultiplexer 50 goes out of frame by one clock interval t_{C}, it is likely that the clock timing of pulses f_{C}/4 has shifted by the same amount and the flip-flops 52-1 to 52-4 will produce channel sequences as shown in Fig. 9. When this occurs, the D1 channel appears at the output of flip-flop 52-4 and the marker detector 53 produces an out-of-frame signal to cause the bit timing of the clock pulses f_{C}/4 to be shifted by one clock interval t_{C}. This process is repeated until the marker detector 53 detects a marker in the D1 channel. In the illustrated example of Fig. 9, the bit timing shift is repeated three times.

## Claims

1. A subscriber optical communications system comprising:
a network terminal;
a plurality of subscriber terminals; and
an optical network interconnecting said network terminal and said plurality of subscriber terminals,
said network terminal time-division multiplexing a plurality of channel signals on a bit-by-bit basis into a downlink signal and broadcasting the downlink signal to said subscriber terminals through said optical network,
each of said subscriber terminals receiving the broadcast signal through said optical network and time-division demultiplexing the received downlink signal into component channel signals and selecting a desired one of the component channel signals, and transmitting an uplink signal on a time-division multiplex access mode to said network terminal through said optical network.

2. The subscriber optical communications system of claim 1, wherein said network terminal is arranged to insert a marker into a predetermined one of said channel signals before said channel signals are time-division multiplexed, and wherein each of said subscriber terminals is arranged to detect said marker to identify the predetermined channel signal and use the identified channel signal as a reference position to select said desired component signal.

3. The subscriber optical communications system of claim 2, wherein each of said channel signals has a synchronization field of a predetermined bit sequence, and
wherein said network terminal is arranged to produce a logical inverse of at least one bit value in said synchronization field as an indication of said marker, and
wherein each of said subscriber terminals is arranged to detect said synchronization field containing said logical inverse of said at least one bit value and produce a logical inverse of said at least one logically inverted bit value to restore said predetermined bit sequence.

4. The subscriber optical communications system of claim 3, wherein each of said multiplexed channel signals contains a scrambled sequence following said synchronization field.

5. The subscriber optical communications system of claim 2, wherein each of said channel signals comprises a series of payload cells and an OAM (operations, administration and maintenance) cell which occurs at predetermined intervals, said OAM cell containing a synchronization field of a predetermined bit sequence, and
wherein said network terminal is arranged to produce a logical inverse of at least one bit value in said synchronization field as an indication of said marker, and
wherein each of said subscriber terminals is arranged to detect said synchronization field containing said logical inverse of said at least one bit value and produce a logical inverse of said at least one logically inverted bit value to restore said predetermined bit sequence.

6. The subscriber optical communications system of claim 5, wherein said payload cells contain a scrambled sequence following said synchronization field.

7. The subscriber optical communications system of claim 3, 4, 5, or 6 wherein said network terminal comprises:
a detector for detecting said a synchronization field in said predetermined one of said channel signals; and
a marker inserting circuit for inserting said marker into said predetermined one of said channel signals in response to said synchronization field detected by said detector.

8. The subscriber optical communications system of claim 7, wherein said marker inserting circuit comprises a bit reversal circuit for producing a logical inverse of one or more bits of said synchronization field as an indication of said marker in response to said synchronization field detected by said detector.

9. The system of any one of claims 3 to 9, wherein each of said subscriber terminals comprises:
a time division demultiplexer for demultiplexing the received broadcast signals on a bit-by-bit basis into said component channel signals and causing the demultiplexed channel signals to appear at respective output terminals thereof;
a plurality of marker detectors respectively connected to the output terminals of said time division demultiplexer, each of said marker detectors being arranged to produce a marker presence signal when the marker detector receives one of said demultiplexed channel signals containing said marker;
a plurality of marker removal circuits respectively connected to the output terminals of said time division demultiplexer; and
selection circuitry connected to said marker detectors and said marker removal circuits for determining the position of said one of said demultiplexed channel signals containing said marker in response to said marker presence signal, enabling one of said marker removal circuits corresponding to the determined position to remove said marker, and selecting said desired component channel signal from output signals of said marker removal circuits.

10. The subscriber optical communications system of claim 9, wherein each of said marker removal circuits comprises a bit reversal circuit responsive to said marker detected by one of said marker detectors for producing a logical inverse of said at least one logically inverted bit value.

11. The system of any one of claims 3 to 10, wherein each of said subscriber terminals comprises:
a timing shifter for producing timing pulses and shifting said timing pulses by one bit interval in response to an out-of-sync signal;
a time division demultiplexer for demultiplexing the received broadcast signals into said component channel signals in response to said timing pulses and causing the demultiplexed channel signals to appear at respective output terminals thereof;
a marker detector connected to one of the output terminals of said time division demultiplexer, said marker detector being arranged to produce a marker presence signal when the marker detector receives one of said demultiplexed channel signals containing said marker and produce said out-of-sync signal when the marker detector fails to receive said marker containing channel signal for a predetermined interval;
a marker removal circuit connected to said one of the output terminals of the time division demultiplexer for removing said marker from one of said demultiplexed channel signals in response to said marker presence signal; and
selection circuitry connected to said marker removal circuit and ones of said output terminals of the time division demultiplexer for selecting said desired component channel signal from one of an output signal of said marker removal circuit and output signals of said time division demultiplexer.

12. The subscriber optical communications system of claim 11, wherein said marker removal circuit comprises a bit reversal circuit responsive to said marker detected by said marker detector for producing a logical inverse of said at least one logically inverted bit value.
